# EUROPÄISCHE PATENTSCHRIFT

(11) **EP 1 128 248 B1**
(45) Veröffentlichungstag und Bekanntmachung des Hinweises auf die Patenterteilung: **14.09.2016**
(21) Anmeldenummer: 00103651.6
(22) Anmeldetag: 21.02.2000
(51) Int. Cl.: G06F 1/00, H01L 23/58, G06F 21/86, H01L 23/00

(54) **Halbleiterchip mit einem lichtempfindlichen Element**
Semiconductor chip with a light sensitive element
Puce à semi-conducteur comportant un élément photosensible

(43) Veröffentlichungstag der Anmeldung: 29.08.2001
(73) Patentinhaber: Infineon Technologies AG, 85579 Neubiberg (DE)
(72) Erfinder: Dietl, Josef, 81373 München (DE); Brücklmeier, Eric-Roger, 80634 München (DE)
(74) Vertreter: Zimmermann, Tankred Klaus

(56) Entgegenhaltungen:
- EP-A- 0 178 512
- EP-A- 0 510 434
- US-A- 5 053 992

## Beschreibung

Die Erfindung betrifft einen Halbleiterchip mit einer monolithisch integrierten Schaltungsanordnung und mit zumindest einem lichtempfindlichen Element und mit einem einen Rücksetzbefehl für die Schaltungsanordnung auslösenden Schaltmittel, wobei der Rücksetzbefehl in Abhängigkeit des Zustandes des zumindest einen lichtempfindlichen Elementes ausgelöst wird.

Halbleiterchips, die insbesondere in Chipkarten oder Geldkarten zum Einsatz kommen, unterliegen besonderen Sicherheitsanforderungen. Das Vermeiden eines unbefugten Zugriffes durch Dritte auf Speicherinhalte oder die Funktionsweise eines derartigen Halbleiterchips, spielt bei der Entwicklung eine entscheidende Rolle. Unbefugte können sich beispielsweise dadurch Kenntnis über das System und über die gespeicherten, sicherheitsrelevanten Daten verschaffen, indem sie Fehler im Ablauf des Rechenwerkes erzeugen und somit versuchen, aus den resultierenden Ergebnissen Kenntnisse zu erhalten. Die Fehler können beispielsweise durch das Einstrahlen von gepulstem Licht oder α-Strahlung erzeugt werden. Hierdurch werden Diffusionsleckströme vergrößert, wodurch ein Teil der Signale es unter Umständen nicht mehr während eines Taktes auf den bestimmungsgemäßen Wert anzusteigen vermag. Hierdurch errechnet ein Gatter einen falschen Wert. Je häufiger ein derartiges Verrechnen erzwungen wird, desto größer ist die statistische Wahrscheinlichkeit, daß Kenntnisse über das System erlangt werden.

Es gibt verschiedene Lösungsvorschläge, einen mittels Lichteinstrahlung durchgeführten "Angriff" auf einen Halbleiterchip zu unterbinden. So ist beispielsweise in der EP 0 178 512 B1 eine Schaltungsanordnung beschrieben, deren Speicher vor einer elektrooptischen Analyse geschützt ist. Das dort beschriebene Prinzip beruht darauf, daß beim Einsatz von Strahlung zumindest ein Teil der Speicherzellen ausgangsseitig auf ein definiertes Potential, unabhängig vom Ladungszustand der Speicherzellen, geschaltet wird und damit die gespeicherte Information nicht erkennbar ist. Möglich wird dieses Vorgehen dadurch, daß im Umfeld der Speicherzellen ein oder mehrere strahlungsempfindliche Sensoren integriert sind, deren Ausgangssignal vorzugsweise zur definierten Festlegung der an den Speicherausgängen anliegenden Spannung benützt wird.

Weiterhin ist aus der US 5,053,992 ein Halbleiterchip bekannt, der einen geheime Daten beinhaltenden Speicher aufweist, ein undurchsichtiges Gehäuse und eine Vorrichtung zum Löschen der geheimen Daten in dem Fall, indem das Gehäuse vom Halbleiterchip entfernt wird. Die Vorrichtung zum Löschen der Daten beinhaltet dabei ein lichtsensitives Element mit einer bei Lichteinfall detektierbaren Stromcharakteristik. Ein Schaltmittel ist mit dem Speicher verbunden, wobei bei einer Belichtung des lichtsensitiven Elementes die Stromänderung erfasst wird und die geheimen Daten aus dem Speicher entfernt werden. Als lichtsensitive Elemente werden hierbei Dioden und Bipolartransistoren vorgeschlagen, bei denen unter Lichteinwirkung ein Rückwärtsstrom detektierbar ist.

In der EP 0 510 434 A2 sind eine Vorrichtung und ein Verfahren zur Verhinderung der Analyse einer integrierten Schaltung beschrieben, wobei ein Speicherinhalt oder Code bei Bestrahlung unkenntlich gemacht wird. Ein Flip-Flop wird hierbei verwendet, um bei einer Lichteinstrahlung ein zufällig veränderliches Signal am Ausgang zu generieren, das den angeschlossenen Speicher in unvorhersehbarer Weise umprogrammiert.

Die Aufgabe der vorliegenden Erfindung besteht darin, eine Möglichkeit anzugeben, mit der ein Halbleiterchip zu wiederholten Malen vor einer elektrooptischen Analyse geschützt werden kann.

Diese Aufgabe wird mit den Merkmalen des Patentanspruches 1 gelöst. Ausgestaltungen ergeben sich aus den abhängigen Ansprüchen.

Demgemäß ist vorgesehen, als Schaltmittel ein Flip-Flop zu verwenden. Ein Flip-Flop kann durch wenige Bauelemente realisiert werden. Es benötigt somit nur wenig Fläche auf dem Halbleiterchip. Ein Flip-Flop ist leicht zu integrieren und leicht zu verstecken. Es kann auch an die jeweiligen Gegebenheiten auf einfache Weise angepasst werden. Zudem weist die Verwendung eines Flip-Flops als Schaltmittel den Vorteil auf, daß dieses unabhängig von der Technologie des Halbleiterchips, das heißt insbesondere der Schaltungsanordnung, integriert werden kann.

Vorteilhafte Ausgestaltungen ergeben sich aus den Unteransprüchen.

Besonders vorteilhaft ist es, wenn das Schaltmittel ein taktzustandgesteuertes D-Flip-Flop ist. Ein besonders effektiver Schutz wird dann erzielt, wenn das lichtempfindliche Element eine Spannungscharakteristik aufweist und unter Lichteinwirkung kurzschließt. Das lichtempfindliche Element kann beispielsweise eine Fotodiode oder ein unter Licht-Bestrahlung einen Diffusionsleckstrom aufweisender Ladungsspeicher sein. Das lichtempfindliche Element ist jedoch nicht auf diese Ausführungsvarianten beschränkt.

Das Flip-Flop wird derart beschaltet, daß es beim Ansteigen der lokalen Versorgungsspannung des Flip-Flops gesetzt wird. Der anschließende oder gleichzeitige Rücksetzbefehl (Reset oder Start eines Programmablaufes, der die Schaltungsanordnung in einen vordefinierten, geschützten Zustand bringt) des Bausteins setzt auch das Flip-Flop zurück.

In einer Ausgestaltung weist das Flip-Flop einen ersten und einen zweiten Ausgang auf, wobei das zumindest eine lichtempfindliche Element zwischen dem zweiten Ausgang und einem Bezugspotentialanschluß und/oder zwischen dem ersten Ausgang und einem Versorgungspotentialanschluß verschalten ist. Hierdurch werden bei einem Lichtangriff die Schaltzustände des Flip-Flops derart beeinflusst, daß ein Rücksetzbefehl an die Schaltungsanordnung auf dem Halbleiterchip gegeben wird und gleichzeitig auch das Flip-Flop zurückgesetzt wird, so daß bei einem erneuten Licht-Angriff der genannte Schutz der Schaltungsanordnung wiederum durchgeführt werden kann.

In einer weiteren Ausgestaltung ist das zumindest eine lichtempfindliche Element dem Schaltmittel zwischen dem Versorgungspotentialanschluß und dem Bezugspotentialanschluß parallel geschalten. Schließt das lichtempfindliche Element unter Lichteinwirkung kurz, so wird die Versorgungsspannung des Flip-Flops dadurch abgesenkt. Nach dem Abklingen des Lichtangriffs zieht die lokale Versorgungsspannung an dem Versorgungspotentialanschluß des Flip-Flops wieder an und das Flip-Flop wird gemäß der obigen Definition gesetzt. Die Erfindung ermöglicht eine hohe Sicherheit gegenüber einem Lichtangriff, da ein gesetztes Flip-Flop zwingend einen Rücksetzbefehl für die Schaltungsanordnung auslöst.

In einer Ausgestaltung der Erfindung ist als Schaltmittel ein erster und ein zweiter Inverter vorgesehen, die eingangsseitig jeweils mit einem durch einen Rücksetzbefehl der Schaltungsanordnung schließbaren Schalter verbunden sind. Der Ausgang des ersten Inverters bildet dabei den ersten Ausgang des Schaltmittels und ist weiterhin mit dem zweiter Inverter verbunden. Der Ausgang des zweiten Inverters bildet den zweiten Ausgang des Schaltmittels. Die Steuereingänge der durch den Rücksetzbefehl der Schaltungsanordnung schließbaren Schalter sind miteinander gekoppelt und bilden den Eingang des Schaltmittels.

Vorteilhafterweise ist mit dem Versorgungspotentialanschluß des Schaltmittels ein Widerstand verbunden. Dieser ermöglicht ein lokales Absinken des Versorgungspotentials des Schaltmittels, unabhängig davon, ob auf dem Halbleiterchip eine Spannungsstabilisierung für die Schaltungsanordnungen vorgesehen ist. Bevorzugt wird der Widerstand als Metall- oder Polysilizium-Widerstand ausgeführt. Hierdurch ist sichergestellt, daß der Wert des Widerstandes unabhängig von einer Lichteinstrahlung konstant ist. Vorteilhaft ist es insbesondere, den Widerstand mäander-förmig auszuführen.

Das Schaltmittel wird vorteilhafterweise in CMOS-Technik realisiert. Gleichfalls ist es jedoch denkbar, das Schaltmittel beziehungsweise die Schaltungsanordnung in NMOS-, PMOS- oder Bipolar-Technologie zu realisieren. Selbstverständlich können das Schaltmittel sowie die Schaltungsanordnung auch in unterschiedlichen Technologien realisiert werden.

Die Erfindung, deren Funktionsweise sowie weitere Vorteile werden anhand der nachfolgenden Figuren weiter erläutert. Es zeigen:
- Figur 1: Die prinzipielle Ausgestaltung des Schaltmittels,
- Figur 2: ein Ausführungsbeispiel des Schaltmittels, bei dem ein Flip-Flop aus zwei Invertern realisiert ist und
- Figur 3: ein konkretes Ausgestaltungsbeispiel des Schaltmittels in CMOS-Technik.

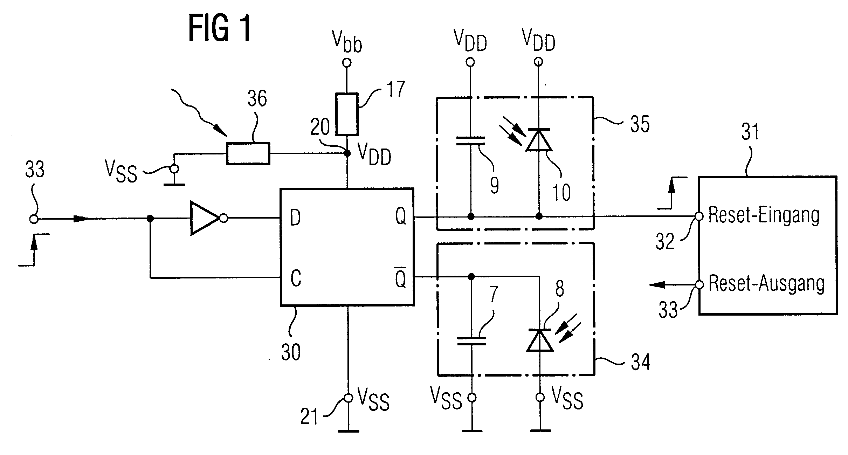

Figur 1 zeigt die prinzipielle Ausführung des Schaltmittels. Mit 31 ist eine Schaltungsanordnung bezeichnet, die beispielsweise einen Speicher und/oder logische Schaltungsteile beinhalten kann. Die Schaltungsanordnung 31 soll gegen einen Lichtangriff geschützt werden. Dies kann dadurch ermöglicht werden, daß an einem Reset-Eingang 32 im Falle eines Lichtangriffes ein Rücksetzbefehl gelegt wird.

Das Schaltmittel, das einen Rücksetzbefehl an den Reset-Eingang 32 legt, besteht aus einem Flip-Flop 30, das in der vorliegenden Figur 1 als taktzustandgesteuertes D-Flip-Flop ausgeführt ist. Dieses ist zwischen einem Versorgungspotentialanschluß 20 (V_{DD}) und einem Bezugspotentialanschluß 21 (V_{SS}), das in der Regel das Maßepotential darstellt, gelegen. Zwischen dem Versorgungspotentialanschluß 20 und dem Bezugspotentialanschluß 21 ist weiterhin ein lichtempfindliches Element 36 vorgesehen. Dieses kann beispielsweise als Fotodiode oder als ein unter Bestrahlung einen Diffusionsleckstrom aufweisender Ladungsspeicher ausgeführt sein. Im Falle eines Lichtangriffes schließt das lichtempfindliche Element 36 kurz, so daß das Potential am Versorgungspotentialanschluß 20 erst absinkt und dann wieder ansteigt, wobei hierdurch ein Rücksetzbefehl an den Reset-Eingang 32 gelegt wird.

Das Flip-Flop weist einen ersten Ausgang Q und einen zweiten Ausgang Q' auf. Der erste Eingang Q ist dabei mit dem Reset-Eingang 32 der Schaltungsanordnung 31 verbunden. Ferner ist mit dem ersten Eingang Q ein lichtempfindliches Element 35, das im vorliegenden Ausführungsbeispiel aus einer fotoempfindlichen Diode 10 und einem Ladungsspeicher 9 besteht, verbunden, das andererseits mit dem Versorgungspotentialanschluß 20 in Verbindung steht. Die Parallelschaltung aus einer Fotodiode 10 und einem Ladungsspeicher 9 steht hierbei stellvertretend für einen unter Bestrahlung einen Diffusionsleckstrom aufweisenden Ladungsspeicher. Der zweite Ausgang Q' ist ebenfalls mit einem lichtempfindlichen Element 34 verbunden, das mit seinem anderen Anschluß mit dem Bezugspotential 21 in Verbindung steht. Der Eingang D des Flip-Flops 30 ist über einen Inverter mit einem Reset-Ausgang 33 der Schaltungsanordnung 31 verbunden. Der Eingang C steht direkt mit dem Reset-Ausgang 33 in Verbindung. Das lichtempfindliche Element 34 an dem zweiten Ausgang Q' bewirkt ein Setzen des taktzustandgesteuerten D-Flip-Flops. Hierbei muß gewährleistet sein, daß der Eingang C während des Anstiegs der Versorgungsspannung V_{DD} nach einem Lichtangriff auf einem niedrigen Potential bleibt.

Nachdem ein Rücksetzbefehl an den Reset-Eingang 32 bei einem Lichtangriff gesendet wurde, liegt nach dem Durchführen des Resets der Schaltungsanordnung an ihrem Reset-Ausgang 33 ein Signal an, das das Flip-Flop 33 wieder in einen Zustand bringt, sodaß bei einem erneuten Lichtangriff das Ausgeben eines Rücksetzbefehles an die Schaltungsanordnung 31 durch das Schaltmittel gewährleistet wäre. Wird von dem Reset-Ausgang 33 aus nicht bekannten Gründen kein Signal an den Eingang des Schaltmittels gelegt, so sorgt das lichtempfindliche Element 34 dafür, daß das Flip-Flop korrekt gesetzt wird.

In dem vorliegenden Ausführungsbeispiel gemäß Figur 1 führt eine steigende Flanke an dem Reset-Eingang 32 zu einem Reset der Schaltungsanordnung. Gleichfalls wird eine ansteigende Signalflanke zum Setzen des Schaltmittels durch den Reset-Ausgang 33 verwendet. Es wäre denkbar, den zweiten Ausgang Q' mit dem Reset-Eingang zu verbinden. In diesem Fall wäre der Reset-Ausgang 33 mit dem Eingang C, D des Schaltmittels verbunden. Hierdurch wird der Reset der Schaltungsanordnung 31 durch eine fallende Flanke ausgelöst. Das Setzen des Schaltmittels, das heißt des Flip-Flops 30 erfolgt dann ebenfalls mittels einer abfallenden Schaltflanke.

Mit dem Versorgungspotentialanschluß 20 des Flip-Flops 30 ist ein Widerstand 17 verbunden, der mit seinem anderen Anschluß an einem spannungsstabilisierten Potential V_{bb} liegt. Durch diesen Widerstand 17 ist es möglich, daß durch das Kurzschließen des lichtempfindlichen Elementes 36 die Spannung am Versorgungspotentialanschluß V_{DD} absinken kann. Der Widerstand 17 ist vorzugsweise als Metall- oder Polysilizium-Widerstand ausgeführt. Er kann beispielsweise mäander-förmig im Substrat des Halbleiterchips realisiert sein.

Das Schaltmittel würde auch dann funktionieren, wenn das lichtempfindliche Element 36 weggelassen würde. In diesem Falle wäre bereits das Absinken der Spannung an dem zweiten Ausgang Q' durch das lichtempfindliche Element 34 ausreichend, um der Schaltungsanordnung 31 einem Rücksetzbefehl zu übermitteln und das Flip-Flop 30 neu zu setzen.

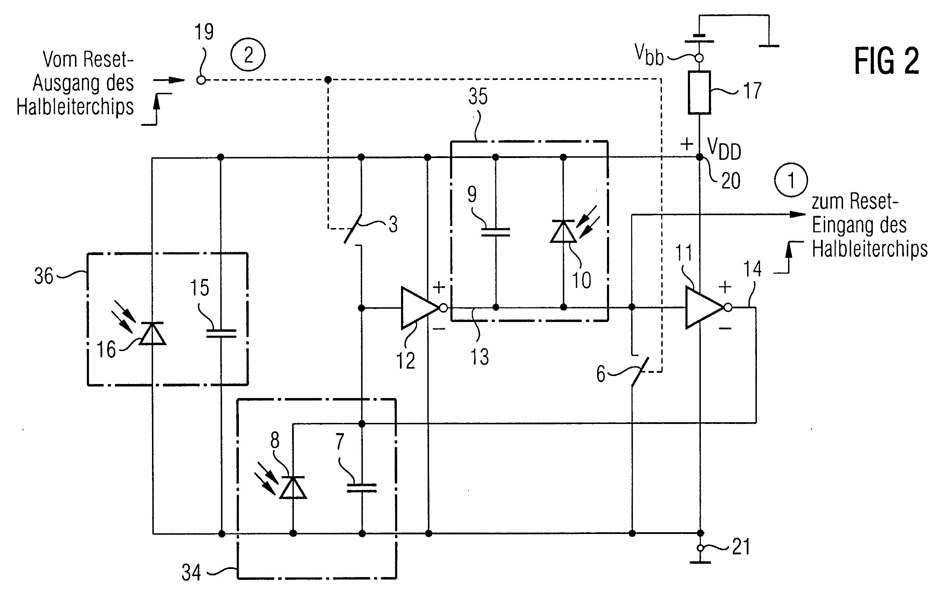

Die Figur 2 zeigt ein Ausführungsbeispiel, bei dem das Flip-Flop 30 aus zwei Invertern 11, 12 und diesen zugeordneten Schaltern 6, 3 gebildet ist. Der Ausgang des Inverters 12 ist dabei mit dem Eingang des Inverters 11 verbunden. Der Ausgang des Inverters 12 stellt den ersten Ausgang Q' des Flip-Flops 30 dar. Dieser ist, wie eingezeichnet, mit dem Reset-Eingang der Schaltungsanordnung des Halbleiterchips verbunden, wobei ein Reset durch eine ansteigende Flanke an dem ersten Ausgang 13 ausgelöst wird. Der erste Ausgang 13 ist wiederum mit dem aus dem Kondensator 9 und der Fotodiode 10 gebildeten lichtempfindlichen Element verbunden. Eingangsseitig ist der Inverter 12 mit dem Schalter 3 verbunden, der mit seinem anderen Anschluß mit dem Versorgungspotentialanschluß 20 in Verbindung steht.

Der Ausgang des Inverters 11, der dem zweiten Ausgang Q' entspricht, ist mit dem aus dem Ladungsspeicher 7 und der Fotodiode 8 gebildeten lichtempfindlichen Element 34 verbunden. Andererseits steht das lichtempfindliche Element 34 mit dem Eingang des Inverters 12 in Verbindung. Auf diese Weise ist eine Rückkopplung des Flip-Flops ermöglicht.

Zwischen dem Eingang des Inverters 11 und dem Bezugspotentialanschluß 21 ist der Schalter 6 vorgesehen. Die Schalter 3, 6 würden bei einer ansteigenden Flanke vom Reset-Ausgang der Schaltungsanordnung des Halbleiterchips kurzzeitig leitend gesteuert, um bei einem erneuten Lichtangriff einen weiteren Rücksetzbefehl für die Schaltungsanordnung des Halbleiterchips zu ermöglichen.

Das optionale lichtempfindliche Element 36, bestehend aus einem Ladungsspeicher 15 und einer Fotodiode 16, ist, physikalisch bedingt, bei einer Realisierung der Schaltungsanordnung in einem Substrat vorhanden. Durch Design kann die Sensibilität der Bauelemente noch verstärkr werden, dies ist jedoch nicht zwingend notwendig.

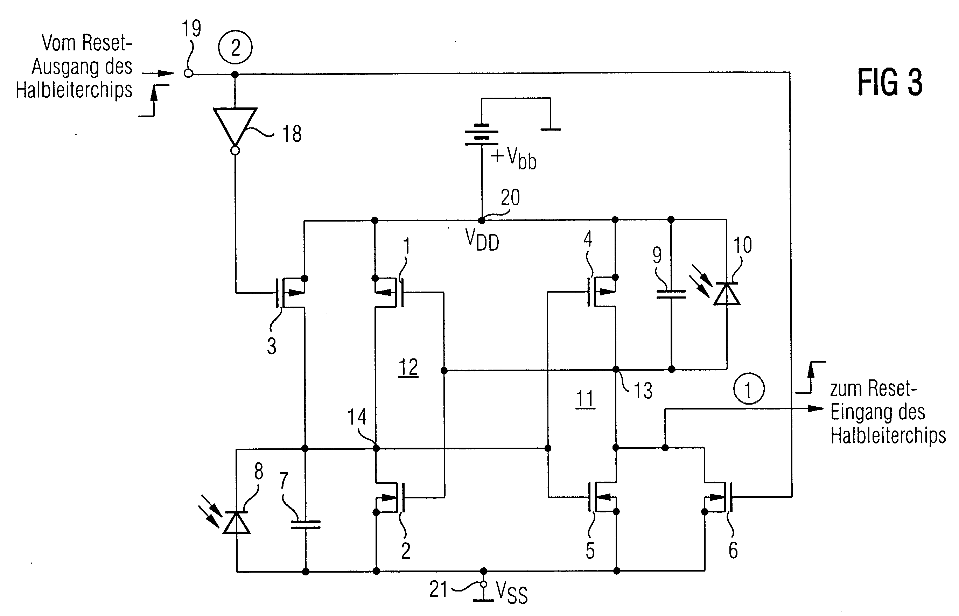

Figur 3 zeigt ein konkretes Ausführungsbeispiel der Erfindung. Hierbei ist das taktzustandgesteuerte D-Flip-Flop mit zwei Invertern und jeweils einem zugeordneten Schalter in CMOS-Technik ausgeführt. Der Inverter 12 besteht hierbei aus einem ersten Halbleiterschalter 1 und einem zweiten Halbleiterschalter 2, die vom unterschiedlichen Leitfähigkeitstyp sind. Die mit ihrer Laststrecke in Serie verschalteten Halbleiterschalter 1, 2 sind zwischen dem Versorgungspotentialanschluß 20 und dem Bezugspotentialanschluß 21 (V_{SS}) verschalten. Die Steueranschlüsse der Halbleiterschalter 1, 2 sind miteinander verbunden. Ausgangsseitig ist der Inverter 12 einerseits mit dem Eingang des Inverters 11 und andererseits mit einem lichtempfindlichen Element, bestehend aus einem Kondensator 7 und einer Fotodiode 8, verbunden. Der Kondensator 7 und die Fotodiode 8 stehen wiederum stellvertretend für einen unter Bestrahlung einen Diffusionsleckstrom aufweisenden Ladungsspeicher. Dem Halbleiterschalter 1 des Inverters 12 ist ein Halbleiterschalter 3 parallel geschalten, dessen Steueranschluß über einen Inverter 18 ebenfalls mit dem Reset-Ausgang des Halbleiterchips verbunden ist.

Der Inverter 11 besteht aus einem Halbleiterschalter 4 und einem Halbleiterschalter 5, deren Laststrecken seriell miteinander verbunden sind. Die Halbleiterschalter 4 und 5 sind wiederum vom unterschiedlichen Leitfähigkeitstyp. Die Steuereingänge sind miteinander verbunden. Ausgangsseitig ist der Inverter 11 mit einem lichtempfindlichen Element, bestehend aus dem Kondensator 7 und der Fotodiode 10 verbunden. Das lichtempfindliche Element ist weiterhin mit dem Versorgungspotentialanschluß 20 verbunden und andererseits mit dem Reset-Eingang der Schaltungsanordnung des Halbleiterchips (nicht gezeigt) verbunden. Der Ausgang 13 des Inverters 11 ist gleichfalls mit dem Eingang des Inverters 12 verbunden. Dem Halbleiterschalter 5, der mit dem Bezugspotentialanschluß 21 verbunden ist, ist weiterhin ein Schalter 6 mit seiner Laststrecke parallel geschaltet, dessen Steueranschluß mit dem Reset-Ausgang der Schaltungsanordnung des Halbleiterchips verbunden ist.

Auf den in den Figuren 1 und 2 dargestellten Widerstand 17 kann im vorliegenden Ausführungsbeispiel verzichtet werden, da zwischen dem Versorgungsspannungsanschluß 20 und dem Bezugspotentialanschluß 21 kein photoempfindlichen Element vorgesehen ist. Am Versorgungsspannungsanschluß 20 liegt deshalb direkt die Versorgungsspannung V_{bb} an. Es versteht sich von alleine, daß das photoempfindliche Element, bestehend aus dem Ladungsspeicher 15 und der Photodiode 16 zusammen mit dem Widerstand 17 jedoch auch Bestandteil der Schaltungsanordnung sein könnten.

Um das Absinken der Spannung am Versorgungspotentialanschluß 20 durch Kurzschließen eines der lichtempfindlichen Elemente 7, 8 bzw. 9, 10 zu ermöglichen, wäre dann der Widerstand 17 mit dem Versorgungspotentialanschluß 20 verbunden, der mit seinem anderen Anschluß mit einer spannungsstabilisierten Versorgungsspannung V_{bb} in Verbindung steht. Dan wäre es notwendig, daß der Widerstand 17 in einer nicht lichtempfindlichen Art und Weise ausgeführt ist. Es bieten sich deshalb eine Realisierung als Metall- oder Polysilizium-Widerstand an. Zur Festlegung eines vorbestimmten Wertes wäre es zweckmäßig, den Widerstand mäander-förmig auszuführen.

Im vorliegenden Ausführungsbeispiel ist der Ausgang 13 mit dem Reset-Eingang der Schaltungsanordnung des Halbleiterchips verbunden. Ein Rücksetzbefehl wird bei einer ansteigenden Flanke ausgelöst. Es wäre auch denkbar, den Ausgang des Inverters 12 mit dem Reset-Eingang der Schaltungsanordnung des Halbleiterchips zu verbinden. In diesem Fall würde ein Rücksetzbefehl bei fallender Flanke ausgelöst werden.

Im vorliegenden Ausführungsbeispiel ist das Schaltermittel in CMOS-Technik realisiert. Die lichtempfindlichen Elemente können somit auf einfache Weise in dem Substrat realisiert werden. Ein pn-Übergang bildet dabei die Fotodiode. Die dazu parallel liegenden Kapazitäten entsprechenden der Sperrschichtkapazität dieser Diode. Sie können, je nach Bedarf, durch die lateralen Ausdehnungen im Substrat beliebig empfindlich realisiert werden.

Die lichtempfindlichen Elemente, die den Halbleiterschaltern 2, 4 parallel geschalten sind, sind als parasitäre Elemente in der Schaltung bereits vorhanden. Die MOS-Transistoren 2, 4 weisen eine Miller-Kapazität auf, die physikalisch bedingt bei jedem MOS-Halbleiterschalter vorhanden ist.

Im folgenden wird die Funktionsweise des erfindungsgemäßen Schaltmittels kurz erklärt. Ist der Halbleiterchip keiner Lichteinstrahlung ausgesetzt, so liegt am Eingang des Inverters 12 das Versorgungspotential V_{DD} an. In diesem Fall ist der Halbleiterschalter 2 leitend, während der Halbleiterschalter 1 gesperrt ist. Am Ausgang 14 des Inverters 12 liegt deshalb das Bezugspotential V_{SS} an. Dies hat zur Folge, daß der Halbleiterschalter 4 leitend und der Halbleiterschalter 5 gesperrt sind. Am Ausgang 13 liegt deshalb das Versorgungspotential V_{DD} an. Zum Setzen des Flip-Flops ist es notwendig, den Ausgang 14 des Inverters 12 mit dem Versorgungspotential V_{DD} zu beaufschlagen. Dies wird mittels des Halbleiterschalters 3 bewerkstelligt, indem dieser leitend geschalten wird. Hierdurch wird der Halbleiterschalter 5 in den leitenden Zustand gebracht, während der Halbleiterschalter 4 sperrt. Am Ausgang 13 liegt nunmehr das Bezugspotential V_{SS} an.

Wird der Halbleiterchip nun einem Lichtangriff ausgesetzt, so beginnt das Potential am Ausgang 14 des Inverters 12 abzusinken. Nach dem Ende des Lichtpulses steigt die Spannung am Ausgang 14 wiederum an, wodurch der Halbleiterschalter 5 vom gesperrten in den leitenden Zustand gebracht wird. Hiermit ist eine ansteigende Schaltflanke am Ausgang 13 des Inverters 11 verbunden. Da dieser mit dem Reset-Eingang der Schaltungsanordnung des Halbleiterchips verbunden ist, führt dies zu einem Rücksetzbefehl für die Schaltungsanordnung. Da der Ausgang des Inverters 11 mit dem Eingang des Inverters 12 verbunden ist, liegt nach dem Auslösen des Rücksetzbefehls am Ausgang 14 des Inverters 12 wiederum das Versorgungspotential V_{DD} an. Das Setzen des Flip-Flops über eine ansteigende Flanke vom Reset-Ausgang der Schaltungsanordnung des Halbleiterchips wäre nunmehr somit nicht zwangsläufig notwendig. Das Setzen des Flip-Flops findet vielmehr aufgrund der Rückkopplung selbständig statt.

### Bezugszeichenliste

- 1: Halbleiterschalter
- 2: Halbleiterschalter
- 3: Halbleiterschalter
- 4: Halbleiterschalter
- 5: Halbleiterschalter
- 6: Halbleiterschalter
- 7: Kondensator
- 8: Fotodiode
- 9: Kondensator
- 10: Fotodiode
- 11: Inverter
- 12: Inverter
- 13: Ausgang
- 14: Ausgang
- 15: Kondensator
- 16: Fotodiode
- 17: Widerstand
- 18: Inverter
- 19: Eingang
- 20: Versorgungspotentialanschluß
- 21: Bezugspotentialanschluß
- 30: Flip-Flop
- 31: Schaltungsanordnung
- 32: Reset-Eingang
- 33: Reset-Ausgang
- 34: Lichtempfindliches Element
- 35: Lichtempfindliches Element
- 36: Lichtempfindliches Element

## Patentansprüche

1. Halbleiterchip mit
- einer monolithisch integrierten Schaltungsanordnung (31),
- einem lichtempfindlichen Element (34, 35, 36) und
- einem Flip-Flop (30) als Schaltmittel,
**dadurch gekennzeichnet, dass**
- das Flip-Flop (30) dafür vorgesehen ist, dass bei einem Lichtangriff ein Rücksetzbefehl an die Schaltungsanordnung (31) gegeben wird, wobei der Rücksetzbefehl in Abhängigkeit von dem Zustand des lichtempfindlichen Elementes (34, 35, 36) ausgelöst wird, und
- gleichzeitig auch das Flip-Flop (30) zurückgesetzt wird, so dass bei einem erneuten Lichtangriff der Schutz der Schaltungsanordnung wiederum bewirkt wird.

2. Halbleiterchip nach Anspruch 1, bei dem
das Flip-Flop (30) ein taktzustandgesteuertes D-Flip-Flop ist.

3. Halbleiterchip nach Anspruch 1 oder 2, bei dem
- das Flip-Flop (30) einen ersten Inverter (12) mit einem ersten Ausgang (13) und einen zweiten Inverter (11) mit einem zweiten Ausgang (14) aufweist,
- der erste Ausgang (13) mit einem Eingang des zweiten Inverters (11) verbunden ist,
- der zweite Ausgang (14) einen Ausgang des Flip-Flops (30) bildet und
- ein lichtempfindliches Element (8) zwischen den zweiten Ausgang (14) und einen Anschluss (21) eines Bezugspotentials und/oder ein lichtempfindliches Element (10) zwischen den ersten Ausgang (13) und einen Anschluss (20) eines Versorgungspotentials geschaltet ist.

4. Halbleiterchip nach einem der Ansprüche 1 bis 3, bei dem das lichtempfindliche Element (34, 35, 36) eine Fotodiode oder ein unter Bestrahlung einen Diffusionsleckstrom aufweisender Ladungsspeicher ist.

5. Halbleiterchip nach einem der Ansprüche 1 bis 4, bei dem
- das lichtempfindliche Element (34, 35, 36) dem Flip-Flop (30) zwischen einem Anschluss (20) eines Versorgungspotentials und einem Anschluss (21) eines Bezugspotentials parallel geschaltet ist,
- das lichtempfindliche Element (34, 35, 36) unter Lichteinwirkung kurzschließt, so dass die an dem Flip-Flop anliegende Spannung abgesenkt wird, und
- nach dem Lichtangriff die Spannung an dem Flip-Flop ansteigt und das Flip-Flop rückgesetzt wird.

6. Halbleiterchip nach einem der Ansprüche 1 bis 5, bei dem mit einem Anschluss (20) eines Versorgungspotentials des Flip-Flops (30) ein Widerstand verbunden ist, der ein lokales Absinken des Versorgungspotentials ermöglicht.

7. Halbleiterchip nach Anspruch 6, bei dem
der Widerstand ein mäanderförmiger Metall- oder Polysilizium-Widerstand ist.

## Claims

1. Semiconductor chip comprising
- a monolithically integrated circuit arrangement (31),
- a light-sensitive element (34, 35, 36) and
- a flip-flop (30) as switching means,
**characterized in that**
- the flip-flop (30) is provided for the purpose that a reset command is given to the circuit arrangement (31) in the case of a light attack, wherein the reset command is triggered depending on the state of the light-sensitive element (34, 35, 36), and
- at the same time the flip-flop (30) is also reset such that, in the case of renewed light attack, the protection of the circuit arrangement is brought about once again.

2. Semiconductor chip according to Claim 1, wherein the flip-flop (30) is a clock-state-controlled D-type flip-flop.

3. Semiconductor chip according to Claim 1 or 2, wherein
- the flip-flop (30) comprises a first inverter (12) having a first output (13) and a second inverter (11) having a second output (14),
- the first output (13) is connected to an input of the second inverter (11),
- the second output (14) forms an output of the flip-flop (30), and
- a light-sensitive element (8) is connected between the second output (14) and a terminal (21) of a reference potential and/or a light-sensitive element (10) is connected between the first output (13) and a terminal (20) of a supply potential.

4. Semiconductor chip according to any of Claims 1 to 3, wherein
the light-sensitive element (34, 35, 36) is a photodiode or a charge store having a diffusion leakage current under irradiation.

5. Semiconductor chip according to any of Claims 1 to 4, wherein
- the light-sensitive element (34, 35, 36) is connected in parallel with the flip-flop (30) between a terminal (20) of a supply potential and a terminal (21) of a reference potential,
- the light-sensitive element (34, 35, 36) short-circuits under the action of light, such that the voltage present at the flip-flop is decreased and
- after the light attack the voltage at the flip-flop rises and the flip-flop is reset.

6. Semiconductor chip according to any of Claims 1 to 5, wherein a resistor is connected to a terminal (20) of a supply potential of the flip-flop (30), said resistor enabling a local reduction of the supply potential.

7. Semiconductor chip according to Claim 6, wherein the resistor is a meander-shaped metal or polysilicon resistor.

## Revendications

1. Puce à semi-conducteur comprenant
- un circuit (31) intégré monolithiquement,
- un élément (34, 35, 36) photosensible,
- une bascule (30) comme moyen de commutation,
**caractérisée en ce que** :
- la bascule (30) est prévue pour donner, s'il se produit une attaque par de la lumière, une instruction de remise à l'état initial au circuit (31), l'instruction de remise à l'état initial étant déclenchée en fonction de l'état de l'élément (34, 35, 36) photosensible, et
- simultanément, la bascule (30) est remise aussi à l'état initial de manière à, s'il se produit une attaque renouvelée par de la lumière, provoquer à nouveau la protection du circuit.

2. Puce à semi-conducteur suivant la revendication 1, dans laquelle
la bascule (30) est une bascule D commandée en état de cadence.

3. Puce à semi-conducteur suivant la revendication 1 ou 2, dans laquelle
- la bascule (30) a un premier inverseur (12) ayant une première sortie (13), et un deuxième inverseur (11) ayant une deuxième sortie (14),
- la première sortie (13) est reliée à une entrée du deuxième inverseur (11),
- la deuxième sortie (14) forme une sortie de la bascule (30), et
- un élément (8) photosensible est monté entre la deuxième sortie (14) et une borne (21) d'un potentiel de référence, et/ou un élément (10) photosensible est monté entre la première sortie (13) et une borne (20) d'un potentiel d'alimentation.

4. Puce à semi-conducteur suivant l'une des revendications 1 à 3, dans laquelle
l'élément (34, 35, 36) photosensible est une photodiode ou un accumulateur de charge ayant, sous rayonnement, un courant de fuite de diffusion.

5. Puce à semi-conducteur suivant l'une des revendications 1 à 4, dans laquelle
- l'élément (34, 35, 36) photosensible est monté en parallèle à la bascule (30) entre une borne (20) d'un potentiel d'alimentation et une borne (21) d'un potentiel de référence,
- l'élément (34, 35, 36) photosensible se court-circuite sous l'effet de la lumière de manière à abaisser la tension appliquée à la bascule, et
- après l'attaque par de la lumière, la tension s'élève sur la bascule et la bascule est remise à l'état initial.

6. Puce à semi-conducteur suivant l'une des revendications 1 à 5, dans laquelle
à la borne (20) d'un potentiel d'alimentation de la bascule (30) est reliée une résistance qui rend possible un abaissement local du potentiel d'alimentation.

7. Puce à semi-conducteur suivant la revendication 6, dans laquelle
la résistance est une résistance sinueuse en métal ou en polysilicium.
